# EUROPÄISCHE PATENTSCHRIFT

(11) **EP 2 110 922 B1**
(45) Veröffentlichungstag und Bekanntmachung des Hinweises auf die Patenterteilung: **25.06.2014**
(21) Anmeldenummer: 09001360.8
(22) Anmeldetag: 31.01.2009
(51) Int. Cl.: B60L 11/18, H02J 7/00

(54) **Datenaustausch zwischen einer Batterieeinheit und einer Steuereinheit**
Data exchange between a battery unit and a control unit
Echange de données entre une unité de batterie et une unité de commande

(30) Priorität: 19.04.2008 DE 102008019810
(43) Veröffentlichungstag der Anmeldung: 21.10.2009
(73) Patentinhaber: Jungheinrich Aktiengesellschaft, 22047 Hamburg (DE)
(72) Erfinder: Rautmann, Jürgen, 24558 Henstedt-Ulzburg (DE); Taube, Stephan, 22846 Norderstedt (DE); Kröger, Hennig, 23845 Itzstedt (DE); Hansen, Nils-Peter, 24114 Kiel (DE)
(74) Vertreter: Hauck Patent- und Rechtsanwälte

(56) Entgegenhaltungen:
- EP-A1- 1 840 078
- DE-A1- 10 304 284
- DE-A1- 19 922 137
- US-A- 4 965 738

## Beschreibung

Die vorliegende Erfindung betrifft ein Verfahren zum Datenaustausch zwischen einer Batterieeinheit und einer Steuereinheit eines elektrisch mit der Batterieeinheit verbundenen Flurförderzeugs oder eines Ladegeräts.

Aus DE 195 35 294 A1 ist eine Überwachung eines batteriebetriebenen Fahrzeugs und dessen Batterie bekannt. Hierbei wird eine Mess-/Steuereinheit zur Ermittlung von Zustandsdaten der Batterie eingesetzt, die Warn- und/oder Steuerbefehle für den Einsatz der Batterie und des Fahrzeugs nach Maßgabe der Zustandsdaten generieren kann.

Für ein effektives Fuhrparkmanagement mit einer Vielzahl von Flurförderzeugen, Batterien und Ladegeräten besteht das Bedürfnis, eine effektive Überwachung der Systembestandteile zu realisieren. Eine besondere Schwierigkeit bereitet hierbei, dass die Komponenten des Systems wechselseitig miteinander kombiniert werden können, es kann also beispielsweise eine Batterie in unterschiedlichen Flurförderzeugen eingesetzt und durch unterschiedliche Batterieladegeräte wieder aufgeladen werden. Um einen Datenaustausch zwischen diesen Komponenten zu gewährleisten ist es daher erforderlich, dass die Komponenten, die in elektrischer Verbindung miteinander stehen, auch kommunikationstechnisch einander zugeordnet werden können. Dieser Vorgang wird in Kommunikationsnetzwerken auch als Assoziierung bezeichnet.

Aus DE 199 22 137 A1 ist ein Flurförderzeug mit einem Batterieblock bekannt geworden. Das Antriebssystem des Flurförderzeugs weist eine Steuereinheit auf, der Batterieblock besitzt einen Datenspeicher. Das Antriebssystem ist derart mit dem Batterieblock verbindbar, dass die in dem Datenspeicher enthaltenen Daten mittels der Steuereinheit lesbar sind und der Datenspeicher durch Signale der Steuereinheit beschreibbar ist. Eine Übertragung von Daten erfolgt genau dann, wenn die zwischen der Batterie und Steuereinheit übertragene elektrische Leistung zumindest annähernd gleich null ist.

Aus EP 1 840 078 A1 ist ein Flurförderzeug mit einem Datenbus bekannt geworden, an dem mehrere elektronische Einheiten des Flurförderzeugs angeschlossen sind, die Telegramme über den Datenbus senden oder empfangen. Mit einer Sende- und Empfangseinheit können die Daten eines sich im Sende- und Empfangsbereich der Sende- und Empfangseinheit befindlichen Transponders erfasst werden. Die Sende- und Empfangseinheit ist mit dem Datenbus verbunden und kann über den Datenbus gesendete Telegramme auswerten und/oder Telegramme senden.

Aus US 4,965,738 ist eine Batterieeinheit bekannt geworden, die einen Ladestrom misst. Ansprechend auf den Ladestrom werden an einem Ausgangsanschluss der Batterieeinheit Batterieparameter zur Verfügung gestellt, die den Ladezustand der Batteriezellen, Temperaturdaten und den Typ der Batterie angeben.

Der Erfindung liegt die Aufgabe zu Grunde, ein Verfahren zum Datenaustausch zwischen einer Batterieeinheit und einer Steuereinheit eines elektrisch mit der Batterieeinheit verbundenen Flurförderzeugs oder eines Ladegeräts bereitzustellen, das mit einfachen Mitteln eine eindeutige Identifizierung der elektrisch an die Batterieeinheit angeschlossenen Komponenten erlaubt.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren dient zum Datenaustausch zwischen einer Batterieeinheit und einer Steuereinheit eines elektrisch mit der Batterieeinheit verbundenen Flurförderzeugs oder Ladegeräts. Sowohl Flurförderzeug als auch Ladegerät sind jeweils mit einer Steuereinheit ausgestattet, die über ein Kommunikationsnetzwerk ein Assoziierungssignal absetzen kann.

Ferner legt die Steuereinheit über die elektrische Verbindung ein Stromimpulsmuster an die Batterieeinheit an. Erfindungsgemäß trägt das Assoziierungssignal eine eindeutige Identifikationsnummer derjenigen Steuereinheit, die das Assoziierungssignal absetzt. Das Assoziierungssignal beinhaltet eine Datenfolge, die das Stromimpulsmuster eindeutig kennzeichnet. Die Batterieeinheit vergleicht die Datenfolge zu dem Stromimpulsmuster aus dem empfangenen Assoziierungssignal mit einem gemessenen elektrischen Impulsmuster. In dem Fall, dass das gemessene elektrische Stromimpulsmuster mit der Datenfolge zu dem Stromimpulsmuster übereinstimmt, setzt die Batterieeinheit eine Assoziierungsantwort ab. Die Assoziierungsantwort wird über das Kommunikationsnetzwerk an die durch die Identifikationsnummer aus dem Assoziierungssignal gekennzeichnete Steuereinheit adressiert. Durch das erfindungsgemäße Verfahren kann sichergestellt werden, dass die Batterieeinheit eindeutig dem Flurförderzeug oder dem Ladegerät zugeordnet wird, das elektrisch leitend mit der Batterieeinheit verbunden ist. Hierdurch wird ausgeschlossen, dass in dem Kommunikationsnetzwerk Daten zwischen der Batterieeinheit und einem falschen Flurförderzeug oder einem falschen Ladegerät ausgetauscht werden. Als besonders vorteilhaft hat sich hierbei auch herausgestellt, dass die Zuordnung der Batterieeinheit zu einem Gerät stets nur dann erfolgen kann, wenn eine intakte elektrische Verbindung vorliegt.

In einer bevorzugten Ausgestaltung enthält die Assoziierungsantwort der Batterieeinheit eine eindeutige Identifikationsnummer. Auf diese Weise wird für einen späteren Datenaustausch zwischen der Batterieeinheit und dem elektrisch an die Batterieeinheit angeschlossenen Flurförderzeug oder Ladegerät eine gerichtete Kommunikation über das Kommunikationsnetzwerk möglich. Gerichtete Kommunikation in dem Kommunikationsnetzwerk bezeichnet hierbei einen Datenaustausch, bei dem der Empfänger der Daten durch eine Identifikationsnummer eindeutig gekennzeichnet ist. Zum Datenaustausch in dem Kommunikationsnetzwerk verwendet die Batterieeinheit also stets die eindeutige Identifikationsnummer aus dem Assoziierungssignal, während das Flurförderzeug oder das Ladegerät ihrerseits stets die eindeutige Identifikationsnummer der Batterieeinheit aus der Assoziierungsantwort verwenden.

In einer möglichen Ausgestaltung löst die Steuereinheit des Flurförderzeugs nach Einschalten ein Assoziierungssignal für die elektrisch angeschlossene Batterieeinheit aus. Zweckmäßigerweise kann das Flurförderzeug erst vollständig in Betrieb genommen werden, wenn eine Assoziierungsantwort vorliegt und der Vorgang der Zuordnung zu der Batterieeinheit abgeschlossen ist.

In einer ebenfalls bevorzugten Ausgestaltung wird vor oder mit Beginn des Ladevorgangs in der Steuereinheit des Ladegeräts ein Assoziierungssignal für die angeschlossene Batterieeinheit ausgelöst. Der vollständige Ladevorgang kann erst dann eingeleitet werden, wenn die Assoziierungsantwort vorliegt und die Zuordnung zwischen Ladegerät und Batterieeinheit erfolgt ist.

Das an die Batterieeinheit angelegte Stromimpulsmuster des Ladegeräts wird bevorzugt als Ladestrom und/oder als Entladestrom an die Batterieeinheit angelegt. Das Stromimpulsmuster des Flurförderzeugs wird zweckmäßigerweise über eine Leistungselektronik des Flurförderzeugs an die Batterieeinheit angelegt. In den beiden Ausgestaltungen misst die Batterie das aufgeprägte Stromimpulsmuster, um auf das empfangene Assoziierungssignal antworten zu können.

Bei elektrisch betriebenen Flurförderzeugen gibt es Fahrzeugausgestaltungen, bei denen die Batterieeinheit für den Ladevorgang nicht von dem Flurförderzeug getrennt wird, sondern elektrisch mit dem Flurförderzeug und dessen Leistungselektronik verbunden bleibt. In einer Ausgestaltung des erfindungsgemäßen Verfahrens ist daher vorgesehen, dass, wenn die Batterieeinheit elektrisch an das Flurförderzeug und das Ladegerät angeschlossen ist, in der Assoziierungsantwort an das Flurförderzeug auch die eindeutige Identifikationsnummer des angeschlossenen Ladegeräts und in der Assoziierungsantwort an das Ladegerät auch die eindeutige Identifikationsnummer des Flurförderzeugs enthalten ist. Auf diese Weise besteht zusätzlich die Möglichkeit, dass das Flurförderzeug und das Ladegerät Daten direkt über das Kommunikationsnetzwerk miteinander austauschen können.

In einer bevorzugten Ausgestaltung der Erfindung gemäß dem Verfahren werden über das Kommunikationsnetzwerk Daten zur Be- und Entladung der Batterieeinheit ausgetauscht. Anhand dieser Daten ist es möglich, bei späteren Be- und Entladevorgängen der Batterie die Vorgeschichte zu berücksichtigen und die Batterien in schonender Weise einzusetzen.

In einer besonders bevorzugten Ausgestaltung ist das Kommunikationsnetzwerk als ein Funknetz ausgebildet. Die Anwendung eines Funknetzes bittet den Vorteil, dass das Netzwerk sich beliebig an die Erfordernisse des konkreten Einsatzes anpassen kann. Auch ist die Verwendung eines Funknetzwerks besonders kostengünstig, da hier auf Standardkomponenten für ein Funknetzwerk zurückgegriffen werden kann.

In der zweckmäßigen Ausgestaltung sendet die Steuereinheit des Flurförderzeugs oder des Ladegeräts ein Trennsignal für die zugeordnete Batterieeinheit, wenn die elektrische Verbindung zur Batterieeinheit getrennt wird. Um den Trennungsvorgang auch kommunikationstechnisch abzuschließen, sendet die Batterieeinheit nachfolgend eine Trennantwort an die ihr zugeordnete Steuereinheit.

Bevorzugt wird das Stromimpulsmuster zufällig von der Steuereinheit generiert.

Das erfindungsgemäße Verfahren wird nachfolgend an einem Beispiel näher erläutert. Es zeigt:
- Fig. 1: ein Flurförderzeug, eine Batterieeinheit und ein externes Ladegerät in einer schematischen Ansicht, und
- Fig. 2: ein schematisches Ablaufdiagramm zur Assoziierung einer Batterie einheit in einem Funknetzwerk.

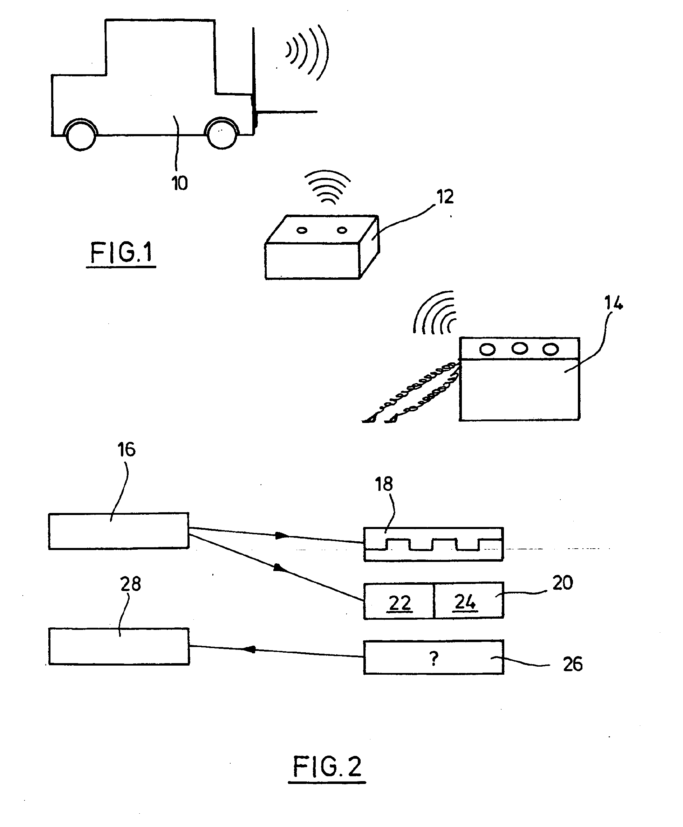

Figur 1 zeigt ein Flurförderzeug 10, eine Batterieeinheit 12 und ein externes Ladegerät 14, die jeweils mit einer Sende- und Empfangseinheit für ein drahtloses Kommunikationsnetzwerk ausgestattet sind. Eine Sende- und Empfangseinheit ist in der Lage, Signale in dem Kommunikationsnetzwerk zu empfangen und Signale über dieses zu senden. Bei dem drahtlosen Kommunikationsnetzwerk kann es sich um ein herkömmlich aufgebautes Funknetz handeln, das nach einem definierten Standard arbeitet und in dem adressierte Datenpakete miteinander ausgetauscht werden. Die Datenbefehlpakete können spezifische Daten, Steuersignale und sonstige Informationen enthalten, die gemäß einem Protokoll in den Datenpaketen abgelegt sind. In einem Funknetzwerk, insbesondere wenn es in einer Lagerhalle eingesetzt wird, entsteht die Situation, dass das von einem Flurförderzeug 10 gesendete Signal von einer Vielzahl von Empfängern beispielsweise auch von einer Reihe von Batterieeinheiten empfangen wird. Es ist daher notwendig, dass das Flurförderzeug 10 eine eindeutige Identifikationsnummer der anzusprechenden Batterieeinheit kennt. Ebenfalls ist erforderlich, dass auch das Ladegerät die eindeutige Identifikationsnummer der anzusprechenden Batterieeinheit kennt, um mit dieser Daten zu dem Ladevorgang austauschen zu können.

In Figur 2 ist der Ablauf der Assoziierung schematisch dargestellt, in einem ersten Schritt 16 nach dem Einschalten der Steuereinheit des Flurförderzeugs oder der Steuereinheit des Ladegeräts wird eine Nachricht 20 abgesetzt, die alle im Sendebereich befindlichen Batterieeinheiten über Funk über ein Strommuster informieren. Die abgesendete Nachricht 20 besitzt daher einen den Absender identifizierenden Teil 22 und einen das Stromimpulsmuster 18 kennzeichnenden Teil 24. Ferner wird das Stromimpulsmuster 18 über die Leistungsstromkreise geschickt. Nur die Batterieeinheit, die an das Fahrzeug bzw. an das Ladegerät angeschlossen ist, kann das Stromimpulsmuster 18 durch seine Strommessung erkennen und mit dem Teil 24 zu dem Stromimpulsmuster vergleichen (Schritt 26).

Ist der Vergleich erfolgreich und zeigt an, dass das angelegte Stromimpulsmuster und das durch den Teil 24 gekennzeichnete Stromimpulsmuster übereinstimmen, so wird eine Assoziierungsantwort an den Absender des Assoziierungssignals 20 geschickt. Der Absender ist durch den Teil 22 der Assoziierungsdaten 20 eindeutig identifiziert.

In dieser Weise wird eine 1:1 Beziehung zwischen der Steuereinheit des Fahrzeugs zur Batterieeinheit und/oder eine 1:1 Beziehung der Steuereinheit des Ladegeräts und der Batterieeinheit hergestellt. Soll zusätzlich eine 1:1 Beziehung zwischen der Steuereinheit des Fahrzeugs und der Steuereinheit des Ladegeräts hergestellt werden, erfolgt dies über die Batterieeinheit, die dann als Assoziierungsantwort an die eine Steuereinheit jeweils die Identifikationsnummer der anderen Steuereinheit mitsendet. Dieser Schritt setzt natürlich voraus, dass sich zuvor eine Steuereinheit bereits erfolgreich an der Batterieeinheit angemeldet hat.

Im Hinblick auf weitere Assoziierungsanfragen, die als Broadcast-Nachrichten über das Funknetz gesendet werden, kann vorgesehen sein, dass die elektrisch angeschlossene Batterieeinheit weitere Assoziierungsdaten ignoriert. Alternativ kann vorgesehen sein, dass die elektrisch angeschlossene Batterieeinheit auch auf weitere Assoziierungsanfragen reagiert und wie vorstehend beschrieben einen Vergleich der Stromimpulsmuster durchführt.

Die Assoziierung beginnt mit dem Einschalten des Flurförderzeugs oder seiner Steuereinheit. Es wird ein Stromimpulsmuster generiert, das über die Leitung der elektrischen Verbindung von Flurförderzeug und Batterieeinheit an diese übertragen wird. Mit dem Stromimpulsmuster belastet die Steuereinheit durch die in dem Flurförderzeug installierte Leistungselektronik für mindestens einen Antrieb die angeschlossene Batterieeinheit. Die Daten zu dem Stromimpulsmuster werden mit einem zeitlichen Vorlauf vor der Beaufschlagung der Batterieeinheit mit dem Stromimpulsmuster bereits über das Kommunikationsnetzwerk gesendet. Die Batterieeinheit ist so in der Lage, in einen Zustand zu wechseln, in dem die an der Batterieeinheit auftretenden Strom- und/oder Spannungswerte zum Vergleich mit dem Stromimpulsmuster ausgewertet werden können.

Der Begriff Stromimpulsmuster, wie er zur Beschreibung der vorliegenden Erfindung verwendet wurde, ist nicht notwendig auf ein Muster aus Stromwerten beschränkt. Es ist auch durchaus denkbar, dass als übertragenes Stromimpulsmuster auch teilweise oder ausschließlich auf Phaseninformationen oder Spannungswerte an der Batterieeinheit zurückgegriffen wird. Muster wird bei der vorliegenden Erfindung bevorzugt als zeitliche Abfolge von Signalen verstanden, wenn jedoch die Möglichkeit besteht durch mehrere Anschlüsse der Batterieeinheit räumliche Muster zu definieren, so ist dies von dem Begriff Stromimpulsmuster mit umfasst.

## Patentansprüche

1. Verfahren zum Datenaustausch zwischen einer Batterieeinheit (12) und einer Steuereinheit eines elektrisch mit der Batterie verbundenen Flurförderzeugs (10) oder eines Ladegeräts (14), **dadurch gekennzeichnet, dass**
- die Steuereinheit des Flurförderzeugs (10) oder des Ladegeräts (14) ein Stromimpulsmuster über die elektrische Verbindung an die Batterieeinheit (12) anlegt und die Steuereinheit über ein Kommunikationsnetzwerk ein Assoziierungssignal absetzt, das eine eindeutige Identifikationsnummer der Steuereinheit und eine Datenfolge enthält, die das Stromimpulsmuster (18) eindeutig kennzeichnet, und
- die Batterieeinheit die Datenfolge zu dem Stromimpulsmuster (18) aus dem empfangenen Assoziierungssignal (20) mit einem gemessenen elektrischen Stromimpulsmuster (18) vergleicht (26) und im Fall, dass diese übereinstimmen an die durch die Identifikationsnummer gekennzeichnete Steuereinheit eine Assoziierungsantwort über das Kommunikationsnetzwerk sendet.

2. Verfahren nach Anspruch 1, **dadurch gekennzeichnet, dass** die Assoziierungsantwort eine eindeutige Identifikationsnummer der Batterieeinheit (12) enthält.

3. Verfahren nach Anspruch 2, **dadurch gekennzeichnet, dass** der Datenaustausch zwischen der Batterieeinheit (12) und einem elektrisch mit diesem verbundenen Flurförderzeug (10) oder einem Ladegerät (14) unter Angabe der eindeutigen Identifikationsnummer aus dem Assoziierungssignal oder aus der Assoziierungsantwort erfolgt.

4. Verfahren nach einem der Ansprüche 1 bis 3, **dadurch gekennzeichnet, dass** die Steuereinheit des Flurförderzeugs (10) nach einem Einschalten ein Assoziierungssignal für seine elektrisch angeschlossene Batterieeinheit auslöst.

5. Verfahren nach einem der Ansprüche 1 bis 4, **dadurch gekennzeichnet, dass** die Steuereinheit des Ladegeräts (14) vor oder mit Beginn des Ladevorgangs das Assoziierungssignal für seine elektrisch angeschlossene Batterieeinheit auslöst.

6. Verfahren nach einem der Ansprüche 1 bis 5, **dadurch gekennzeichnet, dass** das Stromimpulsmuster (18) des Ladegeräts als Ladestrom und/oder Entladestrom an die Batterieeinheit (12) angelegt wird.

7. Verfahren nach einem der Ansprüche 1 bis 6, **dadurch gekennzeichnet, dass** das Stromimpulsmuster (18) des Flurförderzeugs (10) über eine Leistungselektronik des Flurförderzeugs (10) an die Batterieeinheit (12) angelegt wird.

8. Verfahren nach einem der Ansprüche 1 bis 7, **dadurch gekennzeichnet, dass**, wenn die Batterieeinheit (12) elektrisch mit dem Flurförderzeug (10) und dem Ladegerät (14) verbunden ist, die Assoziierungsantwort an das Flurförderzeug (10) auch die eindeutige Identifikationsnummer des Ladegeräts (14) und die Assoziierungsantwort an das Ladegerät (14) auch die eindeutige Identifikationsnummer des Flurförderzeugs (10) enthält.

9. Verfahren nach einem der Ansprüche 1 bis 8, **dadurch gekennzeichnet, dass** über das Kommunikationsnetzwerk Daten zur Be- und Entladung der Batterieeinheit (12) ausgetauscht werden.

10. Verfahren nach einem der Ansprüche 1 bis 10, **dadurch gekennzeichnet, dass** über das Kommunikationsnetzwerk Daten zur Parametrierung und Konfiguration der Batterieeinheit (12) ausgetauscht werden.

11. Verfahren nach einem der Ansprüche 1 bis 10, **dadurch gekennzeichnet, dass** das Kommunikationsnetzwerk als ein Funknetz ausgebildet ist.

12. Verfahren nach einem der Ansprüche 1 bis 11, **dadurch gekennzeichnet, dass** die Batterieeinheit (12) einen Datenspeicher enthält, in dem Daten zu Be- und Entladungsvorgängen der Batterieeinheit (12) gespeichert werden.

13. Verfahren nach einem der Ansprüche 1 bis 12, **dadurch gekennzeichnet, dass** die Steuereinheit des Flurförderzeugs (10) und/oder die Steuereinheit des Ladegeräts (14) ein Trennsignal an die Batterieeinheit (12) sendet, wenn die elektrische Verbindung zur Batterieeinheit (12) getrennt wird.

14. Verfahren nach Anspruch 1 bis 13, **dadurch gekennzeichnet, dass** die Batterieeinheit (12) eine Trennantwort an die zugeordnete Steuereinheit sendet.

15. Verfahren nach Anspruch 14, **dadurch gekennzeichnet, dass** das Stromimpulsmuster (18) zufällig von der Steuereinheit generiert wird.

## Claims

1. A method for data exchange between a battery unit (12) and a control unit of a floor conveyor (10) which is electrically connected to the battery, or of a recharger (14), **characterised in that**
• the control unit of the floor conveyor (10) or of the recharger (14) applies a current pulse pattern to the battery unit (12) via the electric connection, and the control unit emits an association signal via a communication network, the signal containing an unambiguous identification number of the control unit and a sequence of data which unambiguously characterises the current pulse pattern (18), and
• the battery unit compares (26) the sequence of data concerning the current pulse pattern (18) from the received association signal (20) with a measured electrical current pulse pattern (18), and emits an association response to the control unit that is **characterized by** the identification number (ID) via the communication network in case that these are coincident.

2. The method according to claim 1, **characterized in that** the association response contains an unambiguous ID of the battery unit (12).

3. The method according to claim 2, **characterized in that** the data exchange between the battery unit (12) and a floor conveyor (10) or a recharger (14) which is electrically connected to it takes place accompanied by indication of the unambiguous ID from the association signal or from the association response.

4. A method according to any one of claims 1 to 3, **characterized in that** the control unit of the floor conveyor (10) releases an association signal for its electrically connected battery unit after being switched on.

5. A method according to any one of claims 1 to 4, **characterized in that** the control unit of the recharger (14) releases the association signal for its electrically connected battery unit before or when beginning the charging process.

6. A method according to any one of claims 1 to 5, **characterized in that** the current pulse pattern (18) of the recharger is applied to the battery unit (12) as charging current and/or discharging current.

7. A method according to any one of claims 1 to 6, **characterized in that** the current pulse pattern (18) of the floor conveyor (10) is applied to the battery unit (12) via a power electronics of the floor conveyor (10).

8. A method according to any one of claims 1 to 7, **characterized in that** when the battery unit (12) is electrically connected to the floor conveyor (10) and the recharger (14), the association response to the floor conveyor (10) contains also the unambiguous ID of the recharger (14), and the association response to the recharger (14) also the unambiguous ID of the floor conveyor (10).

9. A method according to any one of claims 1 to 8, **characterized in that** data concerning charging and discharging of the battery unit (12) are exchanged via the communication network.

10. A method according to any one of claims 1 to 9, **characterized in that** data concerning the parameterisation and configuration of the battery unit (12) are exchanged via the communication network.

11. A method according to any one of claims 1 to 10, **characterized in that** the communication network is realized as a wireless network.

12. A method according to any one of claims 1 to 11, **characterized in that** the battery unit (12) contains a data memory in which data concerning charging- and discharging processes of the battery unit (12) are memorized.

13. A method according to any one of claims 1 to 12, **characterized in that** the control unit of the floor conveyor (10) and/or the control unit of the recharger (14) emits a disconnection signal to the battery unit (12) when the electrical connection to the battery unit (12) is disconnected.

14. A method according to any one of claims 1 to 13, **characterized in that** the battery unit (12) emits a disconnection response to the associated control unit.

15. The method according to claim 14, **characterized in that** the current pulse pattern (18) is randomly generated by the control unit.

## Revendications

1. Procédé d'échange de données entre une unité de batterie(12) et une unité de commande d'un chariot de manutention (10) électriquement connecté à la batterie ou d'un chargeur, **caractérisé en ce que**
• l'unité de commande du chariot de manutention (10) ou du chargeur (14) applique un modèle d'impulsion de courant à l'unité de batterie (12) à travers la connexion électrique, et l'unité de commande émet un signal d'association à travers un réseau de communication, qui contient un numéro d'identification univoque de l'unité de commande et une succession de données qui caractérise le modèle d'impulsion de courant (18) de manière univoque, et
• l'unité de batterie compare (26) la succession de données par rapport au modèle d'impulsion de courant (18) provenant du signal d'association (20) reçu avec un modèle d'impulsion de courant (18) électrique mesuré, et émet une réponse d'association à l'unité de commande **caractérisée par** le numéro d'identification à travers le réseau de communication quand ceux-ci sont coïncidents.

2. Procédé selon la revendication 1, **caractérisé en ce que** la réponse d'association contient un numéro d'identification univoque de l'unité de batterie (12).

3. Procédé selon la revendication 2, **caractérisé en ce que** l'échange de données entre l'unité de batterie (12) et un chariot de manutention (10) ou un chargeur (14) qui sont électriquement connectés avec cela se fait sous indication du numéro d'identification univoque provenant du signal d'association ou de la réponse d'association.

4. Procédé selon l'une quelconque des revendications 1 à 3, **caractérisé en ce que** l'unité de commande du chariot de manutention (10) émet un signal d'association pour son unité de batterie électriquement connectée après une mise en marche.

5. Procédé selon l'une quelconque des revendications 1 à 4, **caractérisé en ce que** l'unité de commande du chargeur (14) émet le signal d'association pour son unité de batterie électriquement connectée avant ou avec le commencement du chargement.

6. Procédé selon l'une quelconque des revendications 1 à 5, **caractérisé en ce que** le modèle d'impulsion de courant (18) du chargeur est appliqué à l'unité de batterie (12) comme un courant de charge et/ou courant de décharge.

7. Procédé selon l'une quelconque des revendications 1 à 6, **caractérisé en ce que** le modèle d'impulsion de courant (18) du chariot de manutention (10) est appliqué à l'unité de batterie (12) à travers une électronique de puissance du chariot de manutention (10).

8. Procédé selon l'une quelconque des revendications 1 à 7, **caractérisé en ce que** quand l'unité de batterie (12) est électriquement connectée au chariot de manutention (10) et au chargeur (14), la réponse d'association au chariot de manutention (10) contient aussi le numéro d'identification univoque du chargeur (14), et la réponse d'association au chargeur (14) aussi le numéro d'identification univoque du chariot de manutention (10).

9. Procédé selon l'une quelconque des revendications 1 à 8, **caractérisé en ce que** des données concernant le chargement et le déchargement de l'unité de batterie (12) sont échangées à travers le réseau de communication.

10. Procédé selon l'une quelconque des revendications 1 à 9, **caractérisé en ce que** des données concernant la paramétrisation et la configuration de l'unité de batterie (12) sont échangées à travers le réseau de communication..

11. Procédé selon l'une quelconque des revendications 1 à 10, **caractérisé en ce que** le réseau de communication est réalisé comme un réseau sans fil.

12. Procédé selon l'une quelconque des revendications 1 à 11, **caractérisé en ce que** l'unité de batterie (12) contient une mémoire de données dans laquelle des données concernant des chargements et déchargements de l'unité de batterie (12) sont stockées.

13. Procédé selon l'une quelconque des revendications 1 à 12, **caractérisé en ce que** l'unité de commande du chariot de manutention (10) et/ou l'unité de commande du chargeur (14) émet un signal de déconnexion à l'unité de batterie (12) quand la connexion électrique à l'unité de batterie (12) est déconnectée.

14. Procédé selon l'une quelconque des revendications 1 à 13, **caractérisé en ce que** l'unité de batterie (12) émet une réponse de déconnection à l'unité de commande associée.

15. Procédé selon la revendication 14, **caractérisé en ce que** le modèle d'impulsion de courant (18) est généré par l'unité de commande de manière aléatoire.
